# EUROPÄISCHE PATENTSCHRIFT

(11) **EP 0 381 180 B1**
(45) Veröffentlichungstag und Bekanntmachung des Hinweises auf die Patenterteilung: **02.03.1994**
(21) Anmeldenummer: 90101887.9
(22) Anmeldetag: 31.01.1990
(51) Int. Cl.: B62D 59/02

(54) **Treibachsanhänger**
Trailer with a driven axle
Remorque essieu moteur

(30) Priorität: 02.02.1989 CH 361/89
(43) Veröffentlichungstag der Anmeldung: 08.08.1990
(73) Patentinhaber: BUCHER-GUYER AG Maschinenfabrik, CH-8166 Niederweningen (CH)
(72) Erfinder: Marchetti, Werner, CH-8166 Niederweningen (CH); Howald, Andreas, CH-8166 Niederweningen (CH)

(56) Entgegenhaltungen:
- FR-A- 992 285
- FR-A- 1 191 686
- FR-A- 2 376 606
- US-A- 4 171 825

## Beschreibung

Die Erfindung betrifft einen Treibachsanhänger nach dem Oberbegriff des Patentanspruches 1.

Treibachsanhänger dieser Art werden vornehmlich in unwegigem Gelände, steilen Wegstrecken und bei ungünstigen Bodenverhältnissen eingesetzt.

Die CH-PS 665 178 vermittelt u.a. ein solches Gefährt, bei dem zwei doppelwirkende Hydraulikzylinder am Fahrgestell schwenkbar befestigt sind, wobei der am vorderen Teil, im Bereich der Anhängedeichsel des Treibachsanhängers angeordnete Hydraulikzylinder durch dessen Kolben seitlich von der Anhängevorrichtung mit dem Zugfahrzeug verbunden ist, während der Kolben des hinteren, doppelwirkenden Hydraulikzylinders mit einem Lenkarm der Lenkeinrichtung gekuppelt ist. Dieses Bauprinzip erweist sich als geeignet für einen Treibachsanhänger, bedarf jedoch besonderer konstruktiver Massnahmen für den praktischen Einsatz. Dort zeigen sich die Schwierigkeiten einer hohen Beanspruchung mit Verschleisswirkungen am Gefährt, beispielsweise den Reifen, und Beschädigungen der Fahrstrassen und Wege.

Es liegt der vorliegenden Erfindung somit die Aufgabe zugrunde, ein Gefährt der eingangs genannten Art so auszugestalten, dass es den verschiedenartigen Anforderungen der Praxis gewachsen ist und dass sein Fahr- und Leistungsvermögen den vorkommenden Gelände- und Fahrbahnverhältnissen angepasst werden kann.

Erfindungsgemäss wird diese Aufgabe gelöst durch die im Kenzeichen des Anspruches 1 angegebenen Merkmale.

Diese konstruktiven Massnahmen gestatten im Sinne einer Weiterausbildung die Verwendung eines zur Lenkung der Räderpaare einer Achse vorgesehenen Verstellorgans.

In diesem Zusammenhang erweist sich ein Verstellorgan als besonders geeignet, welches eine zwei Füllräume besitzende Kolben- Zylinder- Einheit aufweist.

Die Erfindung ist in der nachfolgenden Beschreibung und der Zeichnung, die zwei Ausführungsbeispiele zeigt, näher erläutert. Es zeigen:
- Fig. 1: eine auszugsweise Draufsicht auf eine Anhängeverbindung eines Zugfahrzeuges mit einem durch eine lenkbare Antriebsachse dargestellten, lenkbaren Treibachsanhänger und
- Fig. 2: eine alternative Ausführungsform des Verstellorgans zur Lenkung des Treibachsanhängers.

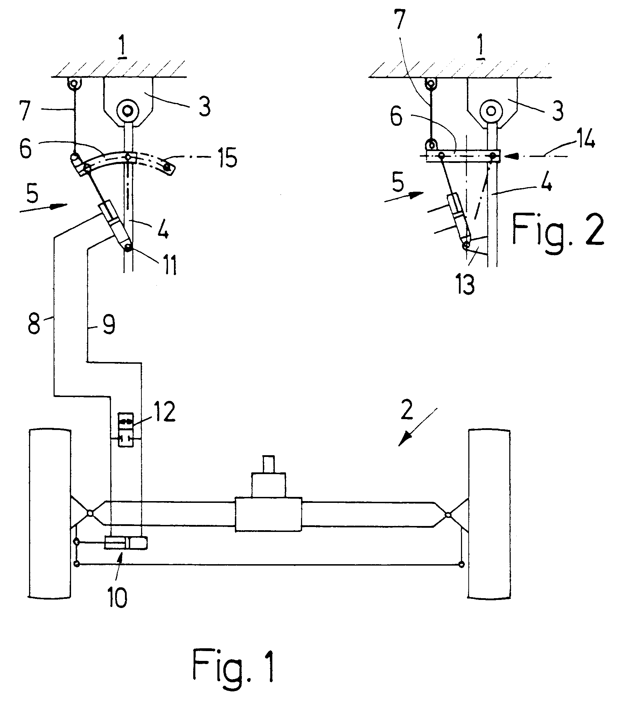

In Fig. 1 ist mit 1 die Heckseite eines Zugfahrzeuges, bspw. eines landwirtschaftlichen Traktors veranschaulicht, welcher mit einem durch die angetriebene Fahrachse 2 angedeuteten Treibachsanhänger gekuppelt ist. Zu diesem Zweck weist das Zugfahrzeug 1 eine Anhängekupplung 3 auf, in welche die Anhängedeichsel 4 eingeführt und mittels nicht gezeigtem Stecknagel gesichert ist. Der Antrieb der Treibachse 2 erfolgt beispielsweise von der Zapfwelle des Zugfahrzeuges 1 über eine Gelenkwelle auf die Treibachse 2.

Als Verstellorgan 5 in Abhängigkeit des durch die Längs- bzw. Längsmittelachsen der beiden Fahrzeuge bei Kurvenfahrt gebildeten Winkels an der Anhängestelle ist eine aus zwei Füllräumen gebildete, doppelwirkende Kolben-Zylinder-Einheit vorgesehen, die einenends an der Anhängedeichsel 4 oder sonstwo an der Vorderseite des Treibachsanhängers und anderenends in einer Führungskulisse 6 angelenkt ist. Die Führungskulisse 6 wiederum ist an der Anhängedeichsel 4 schwenkbar um eine senkrechte Achse gelagert und mit ihrem seitlich abstehenden Ende durch Zwischenelement 7 mit Zugfahrzeug 1 gelenkig verbunden. Dieses Zwischenelement 7 wirkt bei Kurvenfahrt des Gefährts durch die Abweichung der Längsmittelachsen beider Fahrzeuge steuerwirksam auf das Verstellorgan 5 ein und beeinflusst über die Leitungen 8 und 9 die Lenkung des Räderpaares an der Treibachse 2. Die Leitungen 8 und 9 verbinden die jeweils das gleiche Füllvolumen aufweisenden Füllräume des Verstellorgans 5 und der Kolben-Zylinder-Einheit 10. Selbstverständlich würden auch einfachwirkende Kolben-Zylinder-Einheiten mit einer Rückstellfeder oder ähnlichen Elementen die notwendigen Funktionen auslösen. Zur Ausschaltung der Lenkung des Räderpaares an der Treibachse wird das Verstellorgan 5 in der Führungskulisse 6 seitlich über die Anhängedeichsel 4 geschwenkt (siehe strichpunktierte Linie), so, dass die Wirkung des Zwischenelementes 7 auf das Verstellorgan 5 bei Kurvenfahrt ausbleibt bzw. unterbrochen ist. Das Versetzen des Verstellorgans 5 in die Betriebs- oder Ausserbetriebsstellung kann manuell oder vorzugsweise hydraulisch erfoglen.
Das Einstellen der Radlenkung des Treibachsanhängers in Uebereinstimmung mit dem Zugfahrzeug wird mittels eines zwischen die Leitungen 8 und 9 geschalteten Ventil 12 bewirkt. Bei dieser Gelegenheit sind die Längsmittelachsen beider Fahrzeuge vorteilhaft fluchtend ausgerichtet und das Verstellorgan 5 nimmt die Betriebsstellung bei geöffnetem Ventil 10 ein, sodass die Füllräume und Leitungen 8,9 mit dem flüssigen Medium aufgefüllt bzw. ausgeglichen werden können.

Alternativ zu der Ausbildung und Anordnung des Verstellorgans nach Fig. 1 zeigt Fig. 2 eine leicht abweichende Ausführungsform. Das Verstellorgan 5 ist seitlich zu der Anhängedeichsel 4 an einem dafür vorgesehenen Support 13 schwenkbar gelagert und die an der Anhängedeichsel 4 um eine senkrechte Achse schwenkbar gelagerte Führungskulisse 6 ist geradlinig ausgebildet. Dies hat zur Folge, dass auch bei fluchtender Aufstellung der Fahrzeuge durch die Schwenkbewegung des Verstellorgans 5 von einer Stellung in die andere eine Lenkbewegung des Räderpaares an der Treibachse überwunden werden muss. Aus diesem Grund empfiehlt sich zur Betätigung des Verstellorgans 5 ein mit strichpunktiertem Pfeil dargestelltes, hydraulisch antreibbares Betätigungselement 14. Bei 0- oder Ausserbetriebsstellung des Verstellorgans 5 befindet sich dessen schwenkbares Ende beispielsweise über der Anhängedeichselachse und die Schwenkachse des Verstellorgans 5 verläuft etwa in der durch die Schwenkbewegung des Verstellorgans 5 gebildeten Ebene der parallelen Winkelhalbierenden. Diese Anordnungsweise wird zwangsläufig durch andere Organe des vorhandenen Anhängers betimmt.

Zur Erzielung des Hundeganges bedarf es einer Verlängerung 15 der Führungskulisse 6 auf der ihrer Schwenkachse gegenüberliegenden Seite.

## Patentansprüche

1. Heckseitig eines Zugfahrzeuges angehängter und mit letzterem antriebsverbundener, wenigstens eine starre Achse mit einem Ausgleichsgetriebe aufweisender Treibachsanhänger, dessen lenkbare Räderpaare in Abhängigkeit eines durch die sich schneidenden Längsachsen des Zugfahrzeuges und des Treibachsanhängers als Führungsgrösse gebildeten veränderbaren Winkels steuerbar sind, **dadurch** gekennzeichnet, dass ein einenends mit dem Zugfahrzeug (1) verbundenes und anderenends an dem Treibachsanhänger angelenktes Verstellorgan (5) ausschaltbar ausgebildet ist, dass das Verstellorgan (5) eine zwei Füllräume aufweisende Kolben- Zylinder- Einheit umfasst, dass das Verstellorgan (5) in eine Betriebs- und in eine Ausserbetriebsstellung schwenkbar ist, dass die Schwenkachse (11) des Verstellorgans (5) wenigstens annähernd senkrecht zur Anhängedeichsel (4) des Treibachsanhängers angeordnet ist, dass das mit dem Zugfahrzeug verbundene Ende des Verstellorgans (5) in einer schwenkbaren Führungskulisse (6) gelagert ist, dass die Führungskulisse (6) von der Anhängedeichsel (4) seitlich abstehend an dem Treibachsanhänger montiert ist, und dass die Führungskulisse (6) kreisbogenförmig ausgebildet ist.

2. Treibachsanhänger nach Anspruch 1, **dadurch** gekennzeichnet, dass die Führungskulisse (6) durch ein seitlich versetztes Zwischenelement (7) mit dem Zugfahrzeug gekuppelt ist.

3. Treibachsanhänger nach einem der Ansprüche 1 oder 2, **dadurch** gekennzeichnet, dass das Verstellorgan (5) in der Ausserbetriebsstellung, in Draufsicht betrachtet, wenigstens annähernd parallel zur Anhängedeichsel (4) verläuft.

4. Treibachsanhänger nach Anspruch 1, **dadurch** gekennzeichnet, dass das Verstellorgan (5) seitlich versetzt von der Anhängedeichsel (4) gelagert ist.

5. Treibachsanhänger nach einem der Ansprüche 1 bis 3, **dadurch** gekennzeichnet, dass das mit dem Zugfahrzeug verbundene Ende des Verstellorgans (5) in der Ausserbetriebsstellung, in Draufsicht betrachtet, sich etwa über der Anhängedeichsel (4) befindet.

6. Treibachsanhänger nach einem der Ansprüche 1 bis 5, **dadurch** gekennzeichnet, dass die den durch die Endstellungen des Verstellorgans (5) gebildeten Schwenkwinkel halbierende Ebene, in Draufsicht betrachtet, wenigstens annähernd parallel zu der Anhängedeichsel (4) verläuft.

7. Treibachse nach einem der Ansprüche 1 bis 6, **dadurch** gekennzeichnet, dass die Füllräume der als Verstellorgan (5) ausgebildeten doppelwirkenden Kolben- Zylinder-Einheit mit den Füllräumen einer die Lenkung der Räderpaare bewirkenden Kolben- Zylinder- Einheit (10) leitungsverbunden sind.

8. Treibachsanhänger nach Anspruch 7, **dadurch** gekennzeichnet, dass zwischen den die Füllräume der Kolben- Zylinder- Einheiten verbindenden Leitungen (8, 9) ein Ventil (12) geschaltet ist.

9. Treibachsanhänger nach einem der Ansprüche 1 bis 8, **dadurch** gekennzeichnet, dass das Verstellorgan (5) hydraulisch versetzbar angetrieben ist.

10. Treibachsanhänger nach einem der Ansprüche 1 bis 9, **dadurch** gekennzeichnet, dass die Führungskulisse (6) zur Erzielung der Hundegangbewegung eine bezüglich der Schwenkachse (11) des Verstellorgans (5) gegenüberliegende Verlängerung (15) aufweist.

## Claims

1. Trailer with a driven axle hitched to the rear of a towing vehicle with a drive connection to the latter and having at least one rigid axle with a differential, the steerable wheel pairs of which can be controlled as a function of a variable angle formed by the intersecting longitudinal axes of the towing vehicle and of the trailer with a driven axle as a control variable, characterised in that an adjusting element (5) connected at one end to the towing vehicle (1) and hinged at the other end to the trailer with a driven axle can be released, that the adjusting element (5) includes a piston/cylinder unit having two filling spaces, that the adjusting element (5) can be pivoted into an operating position and into an idle position, that the pivot axis (11) of the adjusting element (5) is arranged at least approximately perpendicularly to the towbar (4) of the trailer with a driven axle, that the end of the adjusting element (5) connected to the towing vehicle is mounted in a pivotable guide link (6), that the guide link (6) is mounted on the trailer with a driven axle so that it projects laterally from the towbar (4) and that the guide link (6) is arc-shaped.

2. Trailer with a driven axle according to claim 1, characterised in that the guide link (6) is coupled to the towing vehicle by a laterally offset intermediate element (7).

3. Trailer with a driven axle according to either of claims 1 and 2, characterised in that, in the idle position, viewed from above, the adjusting element (5) extends at least approximately parallel to the towbar (4).

4. Trailer with a driven axle according to claim 1, characterised in that the adjusting element (5) is mounted so that it is laterally offset from the towbar (4).

5. Trailer with a driven axle according to one of claims 1 to 3, characterised in that, in the idle position, viewed from above, the end of the adjusting element (5) connected to the towing vehicle is situated approximately above the towbar (4).

6. Trailer with a driven axle according to one of claims 1 to 5, characterised in that, viewed from above, the plane bisecting the pivot angle formed by the end positions of the adjusting element (5) extends at least approximately parallel to the towbar (4).

7. Trailer with a driven axle according to one of claims 1 to 6, characterised in that the filling spaces of the double-acting piston/cylinder unit designed as an adjusting element (5) are connected by lines to the filling spaces of a piston/cylinder unit (10) steering the wheel pairs.

8. Trailer with a driven axle according to claim 7, characterised in that a valve (12) is connected between the lines (8, 9) connecting the filling spaces of the piston/cylinder units.

9. Trailer with a driven axle according to one of claims 1 to 8, characterised in that the adjusting element (5) is driven in a hydraulically displaceable manner.

10. Trailer with a driven axle according to one of claims 1 to 9, characterised in that the guide link (6) has an extension (15) opposite the pivot axis (11) of the adjusting element (5) in order to obtain the crab steering movement.

## Revendications

1. Remorque à essieu moteur présentant au moins un essieu rigide muni d'un différentiel, accrochée à l'arrière d'un véhicule tracteur et reliée à ce dernier de manière à être entraînée par lui, dont les paires de roues dirigeables peuvent être commandées selon un angle modifiable formé en tant que grandeur de référence par les essieux longitudinaux du véhicule tracteur et de la remorque à essieu moteur qui s'entrecroisent, caractérisée en ce qu'un organe de réglage (5) relié par une extrémité au véhicule tracteur (1) et relié de manière articulée par l'autre extrémité à la remorque à essieu moteur est réalisé de manière à pouvoir être coupé, en ce que l'organe de réglage (5) comporte une unité de piston et cylindre présentant deux espaces de remplissage, en ce que l'organe de réglage (5) peut pivoter dans une position de fonctionnement et dans une position d'arrêt, en ce que l'axe de pivotement (11) de l'organe de réglage (5) est disposé au moins approximativement perpendiculairement à la barre d'attelage (4) de la remorque à essieu moteur, en ce que l'extrémité de l'organe de réglage (5) qui est reliée au véhicule tracteur est montée dans une glissière de guidage (6) pivotante, en ce que la glissière de guidage (6) est montée sur la remorque à essieu moteur avec un écart latéral par rapport à la barre d'attelage (4), et en ce que la glissière de guidage (6) est réalisée en forme d'arc de cercle.

2. Remorque à essieu moteur selon la revendication 1, caractérisée en ce que la glissière de guidage (6) est accouplée au véhicule tracteur par un élément intermédiaire (7) décelé latéralement.

3. Remorque à essieu moteur selon l'une des revendications 1 ou 2, caractérisée en ce que, vu du dessus, l'organe de réglage (5) en position d'arrêt s'étend au moins approximativement parallèlement à la barre d'attelage (4).

4. Remorque à essieu moteur selon la revendication 1, caractérisée en ce que l'organe de réglage (5) est monté décalé latéralement par rapport à la barre d'attelage (4).

5. Remorque à essieu moteur selon l'une des revendications 1 à 3, caractérisée en ce que, vue du dessus, l'extrémité de l'organe de réglage (5) en position d'arrêt qui est reliée au véhicule tracteur se situe approximativement au-dessus de la barre d'attelage (4).

6. Remorque à essieu moteur selon l'une des revendications 1 à 5, caractérisée en ce que, vu du dessus, le plan coupant l'angle de pivotement formé par les positions extrêmes de l'organe de réglage (5) s'étend au moins approximativement parallèlement à la barre d'attelage (4).

7. Essieu moteur selon l'une des revendications 1 à 6, caractérisé en ce que les espaces de remplissage de l'unité de piston et cylindre à double effet réalisée en tant qu'organe de réglage (5) sont reliés par des conduites aux espaces de remplissage d'une unité de piston et cylindre (10) commandant la direction des paires de roues.

8. Remorque à essieu moteur selon la revendication 7, caractérisée en ce qu'une soupape (12) est montée entre les conduites (8,9) reliant les espaces de remplissage des unités de piston et cylindre.

9. Remorque à essieu moteur selon l'une des revendications 1 à 8, caractérisée en ce que l'organe de réglage (5) est commandé de manière à pouvoir être déplacé par le système hydraulique.

10. Remorque à essieu moteur selon l'une des revendications 1 à 9, caractérisée en ce que la glissière de guidage (6) présente un prolongement (15) opposé à l'axe de pivotement (11) de l'organe de réglage (5) pour obtenir un déplacement en crabe.
